(19) Europäisches Patentamt
European Patent Office
Office européen des brevets

(11) Veröffentlichungsnummer: **0 270 490 B1**

(12) # EUROPÄISCHE PATENTSCHRIFT

(45) Veröffentlichungstag der Patentschrift: **10.10.90**

(51) Int. Cl.[5]: **C07F 15/02,** C07F 7/28

(21) Anmeldenummer: **87810637.6**

(22) Anmeldetag: **04.11.87**

(54) **Verbessertes Verfahren zur Herstellung von metallorganischen Verbindungen.**

(30) Priorität: **10.11.86 CH 4482/86**

(43) Veröffentlichungstag der Anmeldung: **08.06.88 Patentblatt 88/23**

(45) Bekanntmachung des Hinweises auf die Patenterteilung: **10.10.90 Patentblatt 90/41**

(84) Benannte Vertragsstaaten: **CH DE FR GB IT LI NL**

(56) Entgegenhaltungen:
**EP-A- 0 094 915**
**EP-A- 0 207 889**
**US-A- 3 268 565**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel(CH)**

(72) Erfinder: **Doggweiler, Hans Oskar, Dr., Rigiweg 4, CH-4313 Möhlin(CH)**
Erfinder: **Desobry, Vincent, Dr., Route du Confin 50, CH-1723 Marly(CH)**

**EP 0 270 490 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein verbessertes Verfahren zur Herstellung von metallorganischen Verbindungen, insbesondere von Eisen-Aren Komplexen, durch Ligandenaustauschreaktion an Ferrocen(derivaten). Eisen-Aren Komplexe und deren Verwendung als Photoinitiatoren für kationisch polymerisierbare Materialien sind bekannt und beispielsweise in der EP-A 94,915 beschrieben. In der Regel stellt man die Verbindungen durch Ligandenaustauschreaktionen aus Metallocenverbindungen her. Dazu wird die Metallocenverbindung, beispielsweise Ferrocen, in Gegenwart einer Lewis-Säure und Al-Metall mit einer aromatischen Verbindung umgesetzt.

Die Herstellung von Cyclopentadien-eisen-aren Verbindungen wird beispielsweise in Chemiker Zeitung 108 (7/8), 239 (1984) und 108 (11), 345 (1984) beschrieben. Weitere Beispiele für diese Reaktionen findet man in Koord. Khim., 1, 1252 (1975). Als Lewis-Säuren werden dabei u.a. Al-Halogenide verwendet. Nach der Lehre dieser letzteren Publikation eignen sich nicht alle Lewis-Säuren für die Ligandenaustauschreaktion an Ferrocen; insbesondere $TiCl_4$ wird als ungeeignet angesehen.

Aus der EP-B 94,915 ist bekannt, dass man $TiCl_4$ in Kombination mit Al-Metall für die Ligandenaustauschreaktion an Ferrocenderivaten einsetzen kann. Es wurde jetzt gefunden, dass man die Ligandenaustauschreaktion in sehr hohen Ausbeuten mit der Kombination Ti-Halogenid/Al-Halogenid so gestalten kann, dass tiefere Reaktionstemperaturen und gleichzeitig höhere Reaktionsgeschwindigkeiten erzielbar sind. Ferner ist es in manchen Fällen möglich, durch eine sorgfältige Auswahl der Mengen von Reaktanden zwei wertvolle metallorganische Verbindungen gleichzeitig zu erhalten.

Dabei nutzt man die Eigenschaft des Ti-IV-Halogenids als Akzeptor für das ausgetauschte Cyclopentadien(derivat) aus und erhält in den besagten Fällen ein isolierbares Reaktionsprodukt. Bei der Durchführung des Ligandenaustausches mit $AlCl_3$ bilden sich aus den abgehenden Cyclopentadien(derivaten) in der Regel polymere Produkte (vergl. D. Astruc et al. in Tetrahedron, 32, 245-249 (1976)).

Die vorliegende Erfindung betrifft ein Verfahren zur Herstellung von Verbindungen der Formel I

$$\left[ R\,Fe\,R^2 \right]_q^{\oplus} X^{q\ominus} \qquad (I),$$

worin R ein Anion der Formel $C_5H_4R^1$ oder $C_9H_7$ ist, $R^1$ Wasserstoff, $C_1$-$C_6$-Alkyl oder Halogen ist, $R^2$ ein $\pi$-Aren bedeutet, X ein q-wertiges Anion ist und q 1, 2, 3 oder 4 bedeutet, durch Umsetzung von Ferrocen oder eines Ferrocenderivats $(C_5H_4R^3)Fe(C_5H_4R^1)$ oder $(C_9H_7)_2Fe$, worin $R^3$ eine der Bedeutungen von $R^1$ besitzt, mit mindestens einem Mol eines $\pi$-Arens $R^2$ in Gegenwart von mindestens 1,4 Mol, bevorzugt mindestens 1,5 Mol, eines Gemisches aus Al- und Ti-IV-Halogenid oder $(C_5H_4R^1)$-Ti-IV-Halogenid und gegebenenfalls in Gegenwart eines metallischen Reduktionsmittels, gegebenenfalls gefolgt von dem Austausch des Anions $X^{q\ominus}$ in an sich bekannter Weise, mit der Massgabe, dass das Lewissäure-Gemisch mindestens 0,1 Mol Al-Halogenid und mindestens 0,1 Mol Ti-IV-Halogenid oder $(C_5H_4R^1)$-Ti-IV-Halogenid enthält und dass die Mengenangaben sich jeweils auf ein Mol des Ferrocen(derivates) beziehen.

q ist vorzugsweise 1 oder 2, besonders bevorzugt 1.

R ist ein Indenylanion $C_9H_7$ oder bevorzugt ein Cyclopentadienylanion $C_5H_4R^1$.

$R^1$ und $R^3$ sind als $C_1$-$C_6$-Alkyl geradkettig oder verzweigt, bevorzugt geradkettig. Beispiele für Reste dieses Typs sind Methyl, Ethyl, n-Propyl, Isopropyl, n-Butyl, n-Pentyl oder n-Hexyl. Bevorzugt wird Methyl.

$R^1$ und $R^3$ sind als Halogen, Fluor, Chlor, Brom oder Iod. Bevorzugt wird Chlor.

$R^1$ und $R^3$ sind vorzugsweise Wasserstoff oder Methyl, ganz besonders bevorzugt Wasserstoff.

Als $\pi$-Arene $R^2$ kommen insbesondere aromatische Gruppen mit 6 bis 24 Kohlenstoffatomen oder heteroaromatische Gruppen mit 3 bis 30 Kohlenstoffatomen und ein- bis zwei Heteroatomen in Betracht, wobei diese Gruppen gegebenenfalls durch gleiche oder verschiedene einwertige Reste wie Halogenatome, vorzugsweise Chlor- oder Bromatome, oder $C_1$-$C_8$-Alkyl-, $C_1$-$C_8$-Alkoxy-, Cyan-, $C_1$-$C_8$-Alkylthio-, $C_2$-$C_6$Monocarbonsäurealkylester- oder Phenylgruppen einfach oder mehrfach substituiert sein können. Diese $\pi$-Arengruppen können einkernige, kondensierte mehrkernige oder unkondensierte mehrkernige aromatische Kohlenwasserstoffe darstellen, wobei in den zuletzt genannten Systemen die Kerne direkt oder über Brückenglieder wie -S- oder -O- verknüpft sein können.

Als heteroaromatische $\pi$-Arene eignen sich vorzugsweise ein oder zwei S- und/oder O-Atome enthaltende Systeme.

Beispiele für geeignete $\pi$-Arene sind Benzol, Toluol, Xylole, Ethylbenzol, Cumol, Methoxybenzol, Ethoxybenzol, Dimethoxybenzol, p-Chlortoluol, m-Chlortoluol, Chlorbenzol, Brombenzol, Dichlorbenzol, Diisopropylbenzol, Trimethylbenzol, Naphthalin, 1,2-Dihydronaphthalin, 1,2,3,4-Tetrahydronaphthalin, Methylnaphthalin, Methoxynaphthalin, Ethoxynaphthalin, Chlornaphthalin, Bromnaphthalin, Dimethylnaphthalin, Biphenyl, Stilben, Inden, 4,4'-Dimethylbiphenyl, Fluoren, Phenanthren, Anthracen, 9,10-Dihydroanthracen, Triphenyl, Pyren, Perylen, Naphthacen, Coronen, Thiophen, Chromen, Xanthen, Thioxanthen, Benzofuran, Benzothiophen, Naphthothiophen, Thianthren, Diphenylenoxyd und Diphenylensulfid.

X kann ein beliebiges q-wertiges Anion einer anorganischen oder organischen Säure sein. Dabei handelt es sich beispielsweise um Halogenide, also um Fluorid, Chlorid, Bromid und Iodid, oder um Pseudohalogenide, beispielsweise um Cyanid, Cyanat oder Thiocyanat, oder um Anionen weiterer anorganischer Säuren, beispielsweise um Sulfat, Phosphat, Nitrat, Perchlorat oder Tetraphenylborat.

Weitere geeignete Anionen leiten sich von Sulfonsäure aliphatischer oder aromatischer Verbindungen ab. Bevorzugte Beispiele dafür sind p-Toluolsulfonat, p-Trifluormethylbenzolsulfonat oder Trifluormethylsulfonat.

Besonders bevorzugt man nicht nukleophile Anionen $X^{q-}$.

Geeignete nicht nukleophile Anionen $X^{q\ominus}$ sind insbesondere Anionen der Formel II

$[LQ_m]^{q\ominus}$(II),

worin L ein zwei- bis siebenwertiges Metall oder Nichtmetall ist, Q ein Halogenatom bedeutet oder, für den Fall, dass L Phosphor, Arsen oder Antimon und m 5 ist, auch OH sein kann, q 1, 2, 3 oder 4 ist und m eine der Wertigkeit von L + q entsprechende ganze Zahl ist.

Beispiele für solche Anionen sind $BF_4^-$, $AlF_4^-$, $AlCl_4^-$, $TiF_6^{2-}$, $PF_6^-$, $SbF_6^-$, $SbCl_6^-$, $SbF_5(OH)^-$, $GeF_6^-$, $ZrF_6^{2-}$, $AsF_6^-$, $FeCl_4^-$, $SnF_6^{2-}$, $SnCl_6^{2-}$ und $BiCl_6^-$. Bevorzugte Beispiele komplexer Anionen sind $BF_4^-$, und insbesondere $AsF_6^-$, $SbF_6^-$ oder $PF_6^-$.

Weitere geeignete nicht nukleophile Anionen leiten sich von Heteropolysäuren ab. Beispiele für Anionen dieses Typs sind Phosphorwolframat ($PO_{40}W_{12}^{3-}$) oder Siliciumwolframat ($SiO_{40}W_{12}^{4-}$).

Man kann auch Cyclopentadienyl-Ti-IV-trihalogenide einsetzen.Bevorzugt verwendet man die Ti-IV-Halogenide.

Cyclopentadienyl-Ti-IV-trihalogenide lassen sich in an sich – bekannter Weise durch Umsetzung der entsprechenden Ti-IV-Halogenide mit Alkalimetallcyclopentadienylen erhalten.

Bevorzugte Ti-IV-Halogenide sind $TiBr_4$ und insbesondere $TiCl_4$.

Die bevorzugte Gesamtmenge an Lewis-Säure beträgt 1,5–6,0 Mol, bevorzugt 1,5–2,5 Mol, insbesondere 1,6–2,0 Mol und ganz besonders bevorzugt 1,7–1,9 Mol, bezogen auf ein Mol Ferrocen(derivat).

Bevorzugt wird ein Verfahren, worin ein Gemisch aus Al- und Ti-IV-Halogenid eingesetzt wird.

Das molare Verhältnis von Ti-IV-Halogenid beträgt vorzugsweise 1:4 bis 4:1, insbesondere jedoch 1:2 bis 1:3

In einer bevorzugten Ausführungsform beträgt der Anteil an Ti-IV-Halogenid 0,6–1,9 Mol, bezogen auf ein Mol Ferrocen(derivat); gegebenenfalls setzt man bei dieser Variante ein metallisches Reduktionsmittel ein.

Besonders bevorzugt wird eine Verfahrensvariante, worin ein Gemisch aus 0,1–4, Mol, ganz besonders 2,0–3,0 Mol, Al-Halogenid und 0,7–1,9 Mol, ganz besonders 0,9–1,1 Mol, Ti-IV-Halogenid, bezogen auf ein Mol Ferrocen(derivat), gegebenenfalls zusammen mit feinverteiltem Al, ganz besonders 0,3-0,4 Mol, eingesetzt wird, wobei Halogenid Bromid oder Chlorid bedeutet.

Ebenfalls bevorzugt wird eine Verfahrensvariante, worin ein Gemisch aus 1,5-2,0 Mol $AlCl_3$ und 0,9-1,1 Mol $(C_5H_5)TiCl_3$ zusammen mit 0,3-0,4 Mol feinverteiltem Al, bezogen auf ein Mol Ferrocen(derivat), eingesetzt wird.

Die Ausführungsform, worin ein Ti-IV-Halogenid/Al-Halogenid Gemisch enthaltend 0,3-0,7 Mol, bevorzugt 0,4-0,6 Mol, ganz besonders bevorzugt etwa 0,5 Mol, Ti-IV-Halogenid, bezogen auf ein Mol Ferrocen(derivat), eingesetzt wird, ist besonders bevorzugt, da bei dieser Verfahrensführung neben dem Metallocenderivat der Formel I auch das Produkt der Formel III

$(R)_2Ti(Hal)_2$ (III)

entsteht, worin R die weiter oben definierte Bedeutung besitzt, vorzugsweise $C_5H_4R^1$ bedeutet, und Hal ein Halogenatom ist.

Verbindungen der Formel III, insbesondere $(C_5H_5)_2TiCl_2$, sind wertvolle Zwischenprodukte und können beispielsweise zur Herstellung von Titanoceninitiatoren verwendet werden. Solche Verbindungen und deren Verwendung als Photoinitiatoren für die Polymerisation ethylenisch ungesättigter Verbindungen sind in der EP-A 122,223 beschrieben.

Bei der obigen Variante nützt man die Eigenschaft des Ti-IV-Halogenids als Cyclopentadienyl-Akzeptor aus. Das aus dem Ferrocen(derivat) ausgetauschte Cyclopentadienyl(derivat) wird also auf das Ti-IV-Halogenid übertragen.

Dabei wählt man zweckmässig ein molares Verhältnis von Al-Halogenid zu Ti-IV-Halogenid von 2:1 oder grösser als 2:1. In Abwesenheit eines metallischen Reduktionsmittels kann auch eine kleinere Menge Al-Halogenid, beispielsweise ein molares Verhältnis von 1:1, eingesetzt werden.

Ueber die stöchiometrischen Mengen weit hinausgehende Mengen an Ti-IV-Halogenid sind bei dieser Verfahrensvariante zu vermeiden, da sich ansonsten polymere Nebenprodukte bilden können, die zu einer Verringerung der Ausbeute an $(Cpd)_2TiHal_2$ [Cpd = Cyclopentadienylanion] führen, was zu Schwierigkeiten bei der Aufarbeitung (Filtration) führen kann.

Bevorzugt arbeitet man bei dieser Verfahrensvariante mit einem Gemisch aus 0,3-0,7 Mol Ti-IV-Halogenid und 0,8-2,0 Mol Al-Halogenid, bezogen auf ein Mol Ferrocen(derivat), gegebenenfalls zusammen mit feinverteiltem Al; dabei bedeutet Halogenid Bromid oder Chlorid.

Besonders bevorzugt arbeitet man bei dieser Verfahrensvariante mit einem Gemisch aus 0,4-0,6 Mol Ti-IV-Halogenid und 1,0-1,8 Mol Al-Halogenid, gegebenenfalls zusammen mit 0,1-1,0 Mol feinverteiltem Al, bezogen auf ein Mol Ferrocen(derivat); dabei bedeutet Halogenid Bromid oder Chlorid.

In einer weiteren ganz besonders bevorzugten Ausführungsform des Verfahrens setzt man ein Gemisch aus 0,4-0,6 Mol, vorzugsweise etwa 0,5 Mol, $TiCl_4$ und 1,2-1,4 Mol, vorzugsweise 1,3-1,35 Mol, $AlCl_3$ gegebenenfalls zusammen mit 0,15-0,2 Mol feinverteiltem Al, bezogen auf ein Mol Ferrocen(derivat), ein.

Als metallische Reduktionsmittel kommen beispielsweise Magnesium, Zink oder Aluminium in Frage. Besonders bevorzugt wird Aluminium.

Die Anwesenheit eines metallischen Reduktionsmittels ist, je nach Mengenverhältnissen der Reaktanden, mehr oder weniger wichtig.

Wählt man die Variante, bei der etwa 0,3-0,7 Mol Ti-IV-Halogenid, bezogen auf ein Mol Ferrocen(derivat), eingesetzt werden, so wird die Ausbeute an Verbindung der Formel I von der Anwesenheit eines metallischen Reduktionsmittels im allgemeinen nicht kritisch beeinflusst. Durch Zugabe eines metallischen Reduktionsmittels lässt sich aber in der Regel die Reinheit der Produkte erhöhen.

Die Tatsache, dass die Reaktion auch ohne Metallzusatz durchgeführt werden kann, ist besonders überraschend, da beim Arbeiten mit $TiCl_4$ als alleiniger Lewis-Säure in Abwesenheit von Al-Metall keine Verbindung der Formel I erhältlich ist (vergl. auch Koord. Khim., 1, 1252 (1975)).

Führt man die Reaktion mit einem Ueber- oder einem Unterschuss an Ti-IV-Halogenid durch, so empfiehlt es sich, zur Steigerung der Ausbeuten ein metallisches Reduktionsmittel zuzusetzen. Dieses kann in beliebigen Mengen eingesetzt werden; es sollten jedoch vorzugsweise mehr als 0,1 Mol, besonders bevorzugt 0,1-1,0 Mol, bezogen auf eine Mol Ferrocen(derivat), eingesetzt werden.

Ganz besonders bevorzugt liegt das metallische Reduktionsmittel in der äquivalenten Menge zum Ti-IV-Halogenid vor. Im Falle von Al verwendet man also bevorzugt ein Drittel der molaren Menge des Ti-IV-Halogenids.

Das Metall sollte in einer Form, die eine grosse Oberfläche bietet, eingesetzt werden. So kann man es beispielsweise als Folie oder in feinverteilter Form zusetzen, vorzugsweise als Pulver oder als Staub.

Das $\pi$-Aren kann in beliebigem Ueberschuss, beispielsweise als Lösungsmittel, eingesetzt werden. Es sollte aber mindestens 1 Mol, bezogen auf ein Mol Ferrocen(derivat), vorgelegt werden. Es können auch Mischungen von $\pi$-Arenen verwendet werden.

Die Reaktion wird gegebenenfalls in einem weiteren Lösungsmittel durchgeführt. Es lassen sich alle Lösungsmittel verwenden, die unter den Reaktionsbedingungen inert sind. Die Basizität dieser Lösungsmittel sollte nicht zu gross sein, um die Lewis-Säure(n) nicht übermässig zu desaktivieren. Beispiele für geeignete Lösungsmittel sind (cyclo)aliphatische oder aromatische Kohlenwasserstoffe, die gegebenenfalls nichtbasische Substituenten tragen können, beispielsweise Halogenatome oder Alkylgruppen. Bevorzugt werden $C_6$-$C_{12}$ Kohlenwasserstoffe. Beispiele für bevorzugte Lösungsmittel dieser Art sind n-Hexan, n-Heptan, n-Octan, n-Nonan, n-Decan, n-Undecan, n-Dodecan oder entsprechende verzweigte Vertreter dieser Typen; man kann auch Gemische von aliphatischen Kohlenwasserstoffen einsetzen, beispielsweise Octanfraktion. Bevorzugtes cycloaliphatisches Lösungsmittel ist Methylcyclohexan. Die aliphatischen Kohlenwasserstoffe können gegebenenfalls chloriert sein. Weitere bevorzugte Lösungsmittel sind Benzol, Toluol, Xylol, Ethylbenzol, Cumol, Chlorbenzol oder Dichlorbenzol.

Vorzugsweise arbeitet man ohne zusätzliches Lösungsmittel und verwendet das $\pi$-Aren $R^2$ in einer Menge von 2,0-10,0 Mol, bezogen auf ein Mol Ferrocen(derivat).

Das Reaktionsgemisch kann gegebenenfalls geringe Mengen an Wasser , beispielsweise 0,1-2 Gew.%, bezogen auf die Menge an Lewis-Säure, enthalten, wie es im Falle der Verwendung von $AlCl_3$ als Lewissäure in Koord. Khim., 1, 1252 (1975) beschrieben ist.

Das Ferrocen(derivat) ist bevorzugt Ferrocen. Man kann aber auch beliebige Derivate einsetzen, die substituierte Cyclopentadienylanionen oder Indenylanionen aufweisen. Beispiele für solche Derivate sind Bis-indenyl-eisen-(II), Chlor- oder Dichlorferrocen oder Methyl- bzw. Dimethylferrocen. Vorzugsweise verwendet man Ferrocen oder die leicht zugänglichen monosubstituierten Ferrocenderivate, insbesondere jedoch Ferrocen.

Die Reaktion wird zweckmässigerweise im Temperaturbereich von 15-250°C durchgeführt. Bevorzugter Temperaturbereich ist 50-150°C.

Die Reaktionsdauer beträgt, je nach Temperatur, in der Regel 0,25-24 Stunden. Bevorzugt sind 1-2 Stunden.

Das Verfahren kann an der Luft oder unter Schutzgas durchgeführt werden. Vorteilhafterweise führt man es unter Sauerstoffausschluss durch, beispielsweise unter Stickstoff oder unter Argon.

Sämtliche Edukte können gemeinsam vorgelegt werden und die Reaktion kann gegebenenfalls durch Erwärmen eingeleitet werden. In manchen Fällen kann es sich jedoch als zweckmässig erweisen, einzelne Reaktionspartner während der Reaktion zuzugeben. So kann man beispielsweise $TiCl_4$ während der

Reaktion zutropfen, um die Reaktionsgeschwindigkeit und damit auch die Reaktionswärme zu steuern.

Nach Beendigung der Reaktion wird das Reaktionsgemisch in der Regel mit Wasser oder Eis-/Wasser-Gemisch, das gegebenenfalls angesäuert sein kann, desaktiviert. Danach wird das Gemisch in der Regel filtriert, um Al-Metall oder nicht gelöste Reaktionsbestandteile abzutrennen. Unter Umständen wird noch eine Phasentrennung nötig sein. Die erhaltene wässrige Phase wird dann gegebenenfalls mit einem polaren, organischen Lösungsmittel, beispielsweise mit Chloroform oder Dichlormethan, extrahiert, um nichtreagierte Verbindungen oder wertvolle Nebenprodukte zu entfernen. Diese Extraktionsstufe ist dann von besonderem Interesse, wenn die Reaktionsvariante, bei der gleichzeitig $R_2TiHal_2$ entsteht, gewählt wird. In diesem Falle desaktiviert man mit angesäuertem Wasser oder Eis-/ Wassergemisch und führt nach der Filtration und Phasentrennung eine Extraktion unter oxidativen Bedingungen, beispielsweise an der Luft, durch.

Man kann das $R_2TiHal_2$ aber auch durch oxidative Behandlung des mit angesäuertem Wasser oder Eis-/Wassergemisch desaktivierten Reaktionsgemisches ausfällen und anschliessend abfiltrieren. Dazu wird das desaktivierte Reaktionsgemisch beispielsweise mit Luftsauerstoff oder mit anderen Oxidationsmitteln, beispielsweise mit $H_2O_2$, behandelt.

Die Verbindung der Formel I fällt zunächst in Form des Halogenids an. Dieses wird gegebenenfalls in an sich bekannter Weise isoliert und gereinigt, beispielsweise durch Umkristallisieren, oder man führt andere Anionen in an sich bekannter Weise bei der Aufarbeitung des Reaktionsgemisches ein. So kann man beispielsweise der isolierten wässrigen Phase eine Säure oder ein wasserlösliches Salz besagter Säure zusetzen und die Verbindung der Formel I auf diese Weise ausfällen.

Beispiele für geeignete Fällungsmittel sind die Na- oder K-Salze bzw. die freien Säuren der weiter oben als bevorzugt aufgezählten Anionen.

Man kann diese Anionen auch in an sich bekannter Weise mittels Ionenaustausch einführen.

Die Verbindungen der Formel I mit nicht nukleophilen Anionen lassen sich als Photoinitiatoren für kationisch polymerisierbare Materialien einsetzen. Die Verbindungen der Formel I mit nukleophilen Anionen lassen sich in der oben beschriebenen Weise zur Herstellung dieser Photoinitiatoren verwenden.

Die folgenden Beispiele erläutern die Erfindung:

Beispiel 1: ($\eta^6$-Cumol)-($\eta^5$-cyclopentadienyl)-eisen(II)-hexafluorophosphat und Titanocendichlorid

Zu einer Mischung von 600 g (5 Mol) Cumol, 93 g (0,5 Mol) Ferrocen, 6,8 g (0,25 Mol) Aluminiumstaub und 66,8 g (0,5 Mol) Aluminiumchlorid werden unter Stickstoff bei 25°C innert 30 Minuten 47,4 g (0,25 Mol) Titantetrachlorid zugetropft. Das Reaktionsgemisch wird 1 Stunde bei 100°C gerührt, dann auf 30°C abgekühlt und auf 1500 g 6%ige Salzsäure gegossen. Nach dem Abfiltrieren von überschüssigem Aluminium wird die organische Phase abgetrennt. Die wässrige Phase wird zur Entfernung von Titanocendichlorid mit 800 g Chloroform in drei Portionen extrahiert (Ausbeute: 24 g = 39 % d. Th.; Smp.: 260°C). Zur wässrigen Phase werden 92 g (0,5 Mol) Kaliumhexafluorophosphat hinzugegeben, worauf das ausgefallene ($\eta^6$-Cumol)-($\eta^5$-cyclopentadienyl)-eisen(II)-hexafluorophosphat abfiltriert, gewaschen und getrocknet wird. Ausbeute: 137 g (71 % d.Th.); Smp.: 85°C.

Beispiel 2: ($\eta^6$-Cumol)-($\eta^5$-cyclopentadienyl)-eisen(II)-hexafluorophosphat und Titanocendichlorid

Zu einer Mischung von 300 g (2,5 Mol) Cumol, 74,4 g (0,4 Mol) Ferrocen, 1,8 g (0,07 Mol) Aluminiumpulver und 71,2 g (0,53 Mol) Aluminiumchlorid werden unter Stickstoff bei 60°C innert 30 Minuten 37,9 g (0,2 Mol) Titantetrachlorid zugetropft. Das Reaktionsgemisch wird 1 Stunde bei 100°C gerührt, dann auf 25°C abgekühlt und auf eine inertisierte Mischung von 650 g Eis und 150 g Salzsäure 32 % gegossen. Durch Oxidation mit 11,3 g (0,1 Mol) Wasserstoffperoxid 30 % wird Titanocendichlorid ausgefällt und anschliessend abfiltriert (Ausbeute: 44,9 g (90,2 % d. Th.); Smp.: 280°C). Nach der Phasentrennung werden zur wässrigen Phase 81 g (0,44 Mol) Kaliumhexafluorphosphat als wässrige Lösung zugegeben, worauf das ausgefallene ($\eta^6$-Cumol)-($\eta^5$-cyclopentadienyl)-eisen(II)-hexafluorophosphat abfiltriert, gewaschen und getrocknet wird. Ausbeute: 134 g (86,6 % d. Th.); Smp.: 86°C.

Beispiel 3: ($\eta^6$-Cumol)-($\eta^5$-cyclopentadienyl)-eisen(II)-hexafluorophosphat und Titanocendichlorid (Reaktion mit Cyclopentadienyl-Ti-IV-trichlorid)

Man arbeitet analog zum Beispiel 2: Zu einer gerührten Mischung aus 129,3 g (1,265 mol) Cumol, 27,9 g (0,15 mol) Ferrocen, 33,2 g (0,249 mol) Aluminiumchlorid und 1,35 g (0,0495 mol) Aluminiumpulver werden unter Stickstoff bei 60°C innert 30 Minuten 32,9 g (0,15 mol) Cyclopentadienyl-Titantrichlorid zugegeben. Das Reaktionsgemisch wird 1,5 Stunden bei 100°C gerührt, dann auf 25°C abgekühlt und analog Beipiel 2 aufgearbeitet. Damit werden 20,2 g rohes Titanocendichlorid (54,2 % der Theorie), das durch Sublimation weiter gereinigt wird, und 40 g ($\eta^6$-Cumol)-($\eta^5$-cyclopentadienyl)-eisen(II)-hexafluorophosphat (69,1 % der Theorie; Smp. 85°C) bekommen.

| Elementaranalyse | % C | % H |
|---|---|---|
| $[(Cumol)Fe(Cpd)]PF_6$ Ber. | 43,55 | 4,44 |
| Gef. | 43,79 | 4,47 |
| $Cpd_2TiCl_2$ Ber. | 48,24 | 4,05 |
| (sublimiert) Gef. | 48,26 | 4,11. |

Beispiel 4: ($\eta^6$-Cumol)-($\eta^5$-cyclopentadienyl)-eisen(II)-hexafluorophosphat

Analog Beispiel 2 und mit der Stöchiometrie (Angaben jeweils in Mol) Ferrocen/$AlCl_3$/Al/$TiCl_4$/Cumol: 1/1,66/0,33/1/10 werden 90,05 % Ausbeute an ($\eta^6$-Cumol)-($\eta^5$-cyclopentadienyl)-eisen(II)-hexafluorophosphat vom Smp. 83-85°C gewonnen.

| Elementaranalyse | % C | % H |
|---|---|---|
| Ber. | 43,55 | 4,44 |
| Gef. | 43,61 | 4,44. |

Beispiel 5:

Analog Beispiel 4 aber mit der Stöchiometrie (Angaben jeweils in Mol) Ferrocen/$AlCl_3$/Al/$TiCl_4$/Cumol: 1/2,66/0,33/1/10 beträgt die Ausbeute an ($\eta^6$-Cumol)-($\eta^5$-cyclopentadienyl)-eisen(II)hexafluorophosphat 93,74 %; Smp. 82-84°C.

| Elementaranalyse | % C | % H |
|---|---|---|
| Ber. | 43,55 | 4,44 |
| Gef. | 43,34 | 4,47. |

Beispiele 6-17: Allgemeine Arbeitsvorschrift

Man setzt Ferrocen, das betreffende Aren, $AlCl_3$/$TiCl_4$-Gemisch, Al-Pulver und gegebenenfalls ein Lösungsmittel gemäss der folgenden Tabelle I um. Die Aufarbeitung erfolgt gemäss Beispiel 2 durch Desaktivierung in Eis/Salzsäure, gegebenenfalls Isolierung von Titanocendichlorid, Phasentrennung und Fällung der Eisenverbindung mit Kaliumhexafluorphosphat. Die Analysedaten der erhaltenen Verbindungen sind in Tabelle II zu finden.

Tabelle I: Uebersicht über durchgeführte Versuche

| Beispiel Nr. | Produkt | Ferrocen (Mol) | Aren (Mol) | $AlCl_3$ (Mol) | $TiCl_4$ (Mol) | Al-Pulver (Mol) | Lösungsmittel (Mol) | Ausbeute Fe.Verbindung ( % d.TH) | Ausbeute $Cp_2TiCl_2$ (% d.Th) |
|---|---|---|---|---|---|---|---|---|---|
| 6 | $\eta^6$-Biphenyl-$\eta^5$-cyclopentadienyl-eisen-(II)-hexafluorophosphat | 1 | 5 | 1 | 0,5 | 0,5 | Methylcyclohexan(8) | roh: 72,3<br>krist: 64,1 | [1]) |
| 7 | $\eta^6$-(1,3-Dimethylbenzol)-$\eta^5$-cyclopentadienyl-eisen-(II)-hexafluorophosphat | 1 | 8 | 1 | 0,5 | 0,5 | - | roh: 78<br>krist: 74 | [1]) |
| 8 | $\eta^6$-(1,3,5-Trimethylbenzol)-$\eta^5$-cyclopentadienyl-eisen-(II)-hexafluorophosphat | 1 | 7,2 | 1 | 0,5 | 0,5 | - | roh: 80,3<br>krist: 60 | [1]) |
| 9 | $\eta^6$-Naphthalin-$\eta^5$-cyclopentadienyl-eisen-(II)-hexafluorophosphat | 1 | 4 | 1 | 0,5 | 0,5 | Methylcyclohexan(8) | roh: 79,1<br>krist: 66,2 | [1]) |
| 10 | $\eta^6$-1-Methylnaphthalin-$\eta^5$-cyclopentadienyl-eisen-(II)-hexafluorophosphat | 1 | 4 | 1 | 0,5 | 0,5 | Methylcyclohexan(8) | roh: 84,1<br>krist: 73,5 | [1]) |
| 11 | $\eta^6$-1-Methylnaphthalin-$\eta^5$-cyclopentadienyl-eisen-(II)-hexafluorophosphat | 1 | 6,3 | 1,33 | 0,5 | 0,166 | - | roh: 81,3 | 45,5 |
| 12 | $\eta^6$-2-Methylnaphthalin-$\eta^5$-cyclopentadienyl-eisen-(II)-hexafluorophosphat | 1 | 4 | 1 | 0,5 | 0,5 | Methylcyclohexan(8) | roh: 69<br>krist: 59,8 | [1]) |

Tabelle I: (Fortsetzung)

| Beispiel Nr. | Produkt | Ferrocen (Mol) | Aren (Mol) | $AlCl_3$ (Mol) | $TiCl_4$ (Mol) | Al-Pulver (Mol) | Lösungsmittel (Mol) | Ausbeute Fe.Verbindung ( % d.TH) | Ausbeute $Cp_2TiCl_2$ (% d.Th) |
|---|---|---|---|---|---|---|---|---|---|
| 13 | $\eta^6$-Toluol-$\eta^5$-cyclopentadienyl-eisen-(II)-hexafluorophosphat | 1 | 10 | 1,33 | 0,5 | 0,166 | - | roh: 87 | 78,3 |
| 14 | $\eta^6$-(1,4-Dimethylbenzol)-$\eta^5$-cyclopentadienyl-eisen-(II)-hexafluorophosphat | 1 | 7 | 1,33 | 0,5 | 0,166 | - | roh: 88,4 | 30,5 |
| 15 | $\eta^6$-(1,3-Di-isopropylbenzol)-$\eta^5$-cyclopentadienyl-eisen-(II)-hexafluorophosphat | 1 | 6 | 1,33 | 0,5 | 0,166 | - | roh: 83,1 | 68,8 |
| 16 | $\eta^6$-Cumol-$\eta^5$-methylcyclopentadienyl-eisen-(II)-hexafluorophosphat | 1 [2]) | 6,3 | 1,33 | 0,5 | 0,166 | - | roh: 81,3 | 36,2 [4]) |
| 17 | $\eta^6$-1-Cumol-$\eta^5$-indenyl-eisen-(II)-hexafluorophosphat | 1 [3]) | 10 | 1,33 | 0,5 | 0,166 | - | krist: 70,6 | - |

[1]) Nicht isoliert

[2]) Anstelle Ferrocen wird Bis-methylcyclopentadienyleisen-(II) eingesetzt.

[3]) Anstelle Ferrocen wird Bis-indenyleisen-(II) eingesetzt.

[4]) Es entsteht Bis-(methylcyclopentadienyl)-titan-IV-dichlorid.

**Tabelle II:** Analysedaten der gemäss Beispielen 6-17 erhaltenen Verbindungen

| Beispiel Nr | Elementaranalyse der Eisenverbindung % C | Elementaranalyse der Eisenverbindung % H | Smp. der Eisenverbindung (°C) | Elementaranalyse der Titanverbindung % C | Elementaranalyse der Titanverbindung % H | Elementaranalyse der Titanverbindung % Cl | Smp. der Titanverbindung (°C) |
|---|---|---|---|---|---|---|---|
| 6 | Ber.: 48,60<br>Gef.: 48,54 | 3,60<br>3,58 | 139-141 | | 2) | | 2) |
| 7 | Ber.: 41,97<br>Gef.: 41,9 | 4,06<br>4,07 | 265-270<br>(Zers.) | | 2) | | 2) |
| 8 | Ber.: 43,55<br>Gef.: 43,48 | 4,44<br>4,46 | 290-294 | | 2) | | 2) |
| 9 | Ber.: 45,72<br>Gef.: 45,17 | 3,32<br>3,52 | 170-175 | | 2) | | 2) |
| 10 | Ber.: 47,09<br>Gef.: 46,81 | 3,70<br>3,67 | 155-158 | | 2) | | 2) |
| 11 | 1) | | 3) | | 1) | | 1) |

Tabelle II: (Fortsetzung)

| Beispiel Nr | Elementaranlayse der Eisenverbindung % C | % H | Smp.der Eisenverbindung(°C) | Elementaranalyse der Titanverbindung % C | % H | % Cl | Smp.der Titanverbindung(°C) |
|---|---|---|---|---|---|---|---|
| 12 | Ber.: 47,09<br>Gef.: 47,11 | 3,70<br>3,74 | 155-159 | | [2]) | | [2]) |
| 13 | Ber.: 40,26<br>Gef.: 40,12 | 3,66<br>3,66 | 240-270 | Ber.: 48,24<br>Gef.: 47,37 | 4,05<br>4,21 | 28,48<br>27,7 | 240-270 |
| 14 | Ber.: 41,85<br>Gef.: 41,70 | 4,32<br>4,12 | 180<br>(Zers.) | | [1]) | | [1]) |
| 15 | Ber.: 47,69<br>Gef.: 47,39 | 5,41<br>5,37 | 85-91 | Ber.: 48,24<br>Gef.: 49,56 | 4,05<br>4,55 | 28,48<br>26,03 | 220-260 |
| 16 [4]) [5]) | [1]) | | [1]) | Ber.: 52,05<br>Gef.: 52,03 | 5,09<br>5,10 | 25,59<br>24,94 | [1]) |
| 17 | Ber.: 49,57<br>Gef.: 49,88 | 4,39<br>4,36 | [1]) | | [2]) | | [2]) |

[1]) Nicht durchgeführt.

[2]) Nicht isoliert.

[3]) $^{1}$H-NMR Spektrum der Eisenverbindung ($\delta$-Werte gegen TMS): 2,54; 4,5; 6,2-6,35; 7,03-7,2; 7,6-8,05 ppm (100 MHz Spektrometer)

[4]) $^{1}$H-NMR Spektrum der Eisenverbindung ($\delta$-Werte gegen TMS): 1,33; 1,40; 2,06; 4,97; 6,28 ppm (100 MHz Spektrometer)

[5]) $^{1}$H-NMR Spektrum der Titanverbindung ($\delta$-Werte gegen TMS): 2,33; 6,25-6,5 ppm (100 MHz Spektrometer)

## Patentansprüche

1. Verfahren zur Herstellung von Verbindungen der Formel I

$$\left[ R\ Fe\ R^2 \right]_q^{\oplus} X^{q\ominus} \quad (I),$$

worin R ein Anion der Formel $C_5H_4R^1$ oder $C_9H_7$ ist, $R^1$ Wasserstoff, $C_1$-$C_6$-Alkyl oder Halogen ist, $R^2$ ein η-Aren bedeutet, X ein q-wertiges Anion ist und q 1, 2, 3 oder 4 bedeutet, durch Umsetzung von Ferrocen oder eines Ferrocenderivats $(C_5H_4R^3)$ Fe $(C_5H_4R^1)$ oder $(C_9H_7)_2Fe$, worin $R^3$ eine der Bedeutungen von $R^1$ besitzt, mit mindestens einem Mol eines η-Arens $R^2$ in Gegenwart von mindestens 1,4 Mol eines Gemisches aus Al- und Ti-IV-Halogenid oder $(C_5H_4R^1)$-Ti-IV-Halogenid und gegebenenfalls in Gegenwart eines metallischen Reduktionsmittels, gegebenenfalls gefolgt von dem Austausch des Anions $X^{q?}$ in an sich bekannter Weise, mit der Massgabe, dass das Lewissäure-Gemisch mindestens 0,1 Mol Al-Halogenid und mindestens 0,1 Mol Ti-IV-Halogenid oder $(C_5H_4R^1)$-Ti-IV-Halogenid enthält und dass die Mengenangaben sich jeweils auf ein Mol des Ferrocen(derivates) beziehen.

2. Verfahren gemäss Anspruch 1, worin R ein Cyclopentadienylanion $C_5H_4R^1$ ist und $R^1$ Wasserstoff oder Methyl ist.

3. Verfahren gemäss Anspruch 1, worin $R^1$ Wasserstoff ist.

4. Verfahren gemäss Anspruch 1, worin das η-Aren $R^2$ eine aromatische Gruppe mit 6 bis 24 Kohlenstoffatomen oder eine heteroaromatische Gruppe mit 3 bis 30 Kohlenstoffatomen und ein bis zwei Heteroatomen ist.

5. Verfahren gemäss Anspruch 1, worin X ausgewählt wird aus der Gruppe bestehend aus $BF_4$-, $PF_6$-, $AsF_6$ - und $SbF_6$-.

6. Verfahren gemäss Anspruch 1, worin 1,5-6,0 Mol der Lewis-Säure, bezogen auf ein Mol Ferrocen(derivat), eingesetzt werden.

7. Verfahren gemäss Anspruch 1, worin ein Gemisch aus Al- und Ti-IV-Halogenid eingesetzt wird.

8. Verfahren gemäss Anspruch 1, worin das molare Verhältnis von Ti-IV-Halogenid zu Al-Halogenid 1:4 bis 4:1 beträgt.

9. Verfahren gemäss Anspruch 7. worin 0,6-1,9 Mol Ti-IV-Halogenid, bezogen auf ein Mol Ferrocen(derivat), und gegebenenfalls ein metallisches Reduktionsmittel eingesetzt wird.

10. Verfahren gemäss Anspruch 1, worin ein Gemisch aus 0,1-4,0 Mol Al-Halogenid und 0,7-1,9 Mol Ti-IV-Halogenid, bezogen auf ein Mol Ferrocen(derivat), gegebenenfalls zusammen mit feinverteiltem Al eingesetzt wird, wobei Halogenid Bromid oder Chlorid bedeutet.

11. Verfahren gemäss Anspruch 1, worin ein Gemisch aus 2,0-3,0 Mol $AlCl_3$ und 0,9-1,1 Mol $TiCl_4$ zusammen mit 0,3-0,4 Mol feinverteiltem Al, bezogen auf ein Mol Ferrocen(derivat) eingesetzt wird.

12. Verfahren gemäss Anspruch 1 zur gleichzeitigen Herstellung von Verbindungen der Formel I und der Formel III

$$\left[ R\ Fe\ R^2 \right]_q^{\oplus} X^{q\ominus} \quad (I), \quad (R)_2Ti(Hal)_2 \ (III),$$

worin Hal ein Halogenatom ist und R, $R^2$, X und q die in Anspruch 1 definierte Bedeutung besitzen, dadurch gekennzeichnet, dass man ein Ti-IV-Halogenid/Al-Halogenid Gemisch enthaltend 0,3-0,7 Mol Ti-IV-Halogenid, bezogen auf ein Mol Ferrocen(derivat), gegebenenfalls in Kombination mit einem metallischen Reduktionsmittel einsetzt.

13. Verfahren gemäss Anspruch 12, worin ein Gemisch aus 0,3-0,7 Mol Ti-IV-Halogenid und 0,8-2,0 Mol Al-Halogenid, bezogen auf ein Mol Ferrocen(derivat), gegebenenfalls zusammen mit feinverteiltem Al eingesetzt wird und worin Halogenid Bromid oder Chlorid bedeutet.

14. Verfahren gemäss Anspruch 12, worin ein Gemisch aus 0,4-0,6 Mol Ti-IV-Halogenid und 1,0-1,8 Mol Al-Halogenid, gegebenenfalls zusammen mit 0,1-1,0 Mol feinverteiltem Al, bezogen auf ein Mol Ferrocen(derivat), eingesetzt wird und worin Halogenid Bromid oder Chlorid bedeutet.

15. Verfahren gemäss Anspruch 12, worin als Lewis-Säure ein Gemisch aus 0,4-0,6 Mol $TiCl_4$ und 1,2-1,4 Mol $AlCl_3$, gegebenenfalls zusammen mit 0,15-0,2 Mol feinverteiltem Al, bezogen auf ein Mol Ferrocen(derivat), eingesetzt wird.

16. Verfahren gemäss Anspruch 1, worin 0,1-1,0 Mol metallisches Reduktionsmittel, bezogen auf ein Mol Ferrocen(derivat), eingesetzt werden.

17. Verfahren gemäss Anspruch 1, worin das metallische Reduktionsmittel in einer zum Ti-IV-Halogenid äquivalenten Menge vorliegt.

18. Verfahren gemäss Anspruch 12, worin das Reaktionsgemisch nach Beendigung der Reaktion mit angesäuertem Wasser oder Eis-/Wassergemisch desaktiviert wird und

a) nach der Filtration und Phasentrennung die wässrige Phase mit einem organischen, polaren Lösungsmittel unter oxidativen Bedingungen extrahiert wird oder

b) das desaktivierte Reaktionsgemisch oxidativ behandelt wird.

**Claims**

1. A process for preparing a compound of the formula I

$$\left[ R\ Fe\ R^2 \right]_q^{\oplus} X^{q\ominus} \qquad (I)$$

in which R is an anion of the formula $C_5H_4R^1$ or $C_9H_7$, $R^1$ is hydrogen, $C_1$-$C_6$alkyl or halogen, $R^2$ is a $\pi$-arene, X is a q-valent anion and q is 1, 2, 3 or 4, by reacting ferrocene or a ferrocene derivative ($C_5H_4R^3$) Fe ($C_5H_4R_1$) or $(C_9H_7)_2Fe$, in which $R^3$ has one of the meanings of $R^1$, with at least one mole of a $\pi$-arene $R^2$ in the presence of at least 1.4 moles of a mixture of Al halide and Ti(IV) halide or ($C_5H_4R^1$)-Ti(IV) halide and if desired in the presence of a metallic reducing agent, followed if desired by the replacement of the anion $X^q$ in a manner known per se, with the proviso that the Lewis acid mixture contains at least 0.1 mole of Al halide and at least 0.1 mole of Ti(IV) halide or of ($C_5H_4R^1$)-Ti(IV) halide and that the indicated quantities are all based on one mole of the ferrocene (derivative).

2. A process according to claim 1, wherein R is a cyclopentadienyl anion $C_5H_4R^1$ and $R^1$ is hydrogen or methyl.

3. A process according to claim 1, wherein $R^1$ is hydrogen.

4. A process according to claim 1, wherein the $\pi$-arene R2 is an aromatic group having 6 to 24 carbon atoms or a heteroaromatic group having 3 to 30 carbon atoms and one or two heteroatoms.

5. A process according to claim 1, wherein X is selected from the group consisting of $BF_4$-, $PF_6$-, $AsF_6$- and $SbF_6$-.

6. A process according to claim 1, wherein 1.5-6.0 moles of Lewis acid, based on one mole of ferrocene (derivative), are used.

7. A process according to claim 1, wherein a mixture of Al halide and Ti(IV) halide is used.

8. A process according to claim 1, wherein the molar ratio of Ti(IV) halide: Al halide is 1:4 to 4:1.

9. A process according to claim 7, wherein 0.6-1.9 moles of Ti(IV) halide, based on one mole of ferrocene (derivative), and if desired a metallic reducing agent are used.

10. A process according to claim 1, wherein a mixture of 0.1-4.0 moles of Al halide and 0.7-1.9 moles of Ti(IV) halide, based on one mole of ferrocene (derivative), is used if desired in the presence of finely divided Al, the halide being bromide or chloride.

11. A process according to claim 1, wherein a mixture of 2.0-3.0 moles of $A1C1_3$ and 0.9-1.1 moles of $TiC1_4$ is used together with 0.3-0.4 mole of finely divided Al, based on one mole of ferrocene (derivative).

12. A process according to claim 1 for simultaneously preparing compounds of the formula I and of the formula III

$$\left[ R\ Fe\ R^2 \right]_q^{\oplus} X^{q\ominus} \qquad (I), \quad (R)_2Ti(Hal)_2 \ (III)$$

in which Hal is a halogen atom and R, $R^2$, X and q are as described in claim 1, which comprises using a Ti(IV) halide/Al halide mixture containing 0.3-0.7 mole of Ti(IV) halide, based on one mole of ferrocene (derivative), if desired in combination with a metallic reducing agent.

13. A process according to claim 12, wherein a mixture of 0.3-0.7 mole of Ti(IV) halide and 0.8-2.0 moles of Al halide, based on one mole of ferrocene (derivative), is used if desired in the presence of finely divided Al and wherein halide is bromide or chloride.

14. A process according to claim 12, wherein a mixture of 0.4-0.6 mole of Ti(IV) halide and 1.0-1.8 moles of Al halide is used if desired in the presence of 0.1-1.0 mole of finely divided Al, based on one mole of ferrocene (derivative), and wherein halide is bromide or chloride.

15. A process according to claim 12, wherein the Lewis acid used is a mixture of 0.4-0.6 mole of $TiCl_4$ and 1.2-1.4 moles of $AlCl_3$, if desired in the presence of 0.15-0.2 mole of finely divided Al, based on one mole of ferrocene (derivative).

16. A process according to claim 1, wherein 0.1-1.0 mole of metallic reducing agent, based on one mole of ferrocene (derivative), is used.

17. A process according to claim 1, wherein the metallic reducing agent is present in an amount equivalent to that of the Ti(IV) halide.

18. A process according to claim 12, wherein the reaction mixture is deactivated with acidified water or ice-water after the reaction has ended and
a) after filtration and phase separation the aqueous phase is extracted with an organic, polar solvent under oxidative conditions or
b) the deactivated reaction mixture is treated oxidatively.

**Revendicaitions**

1. Procédé de préparation de composés de formule I cidessous .

$$\left[ R\ Fe\ R^2 \right]_q^{\oplus} X^{q\ominus} \qquad (I)$$

dans laquelle R désigne un anion $C_5H_4R^1$ ou $C_9H_7$, $R^1$ étant l'hydrogène, un alkyle en $C_1$-$C_6$ ou un halogène, $R^2$ un $\pi$-arène, X un anion de valence q et q le nombre 1, 2, 3 ou 4, par réaction du ferrocène ou d'un dérivé du ferrocène ($C_5H_4R^3$) Fe ($C_5H_4R^1$) ou $(C_9H_7)_2Fe$, $R^3$ ayant l'une des significations de $R^1$, avec au moins une mole d'un $\pi$-arène $R^2$ en présence d'au moins 1,4 mol d'un mélange d'un halogénure d'aluminium et d'un halogénure de titane tétravalent ou d'un halogénure de ($C_5H_4R^1$)-Ti tétravalent et le cas échéant en présence d'un agent réducteur métallique, réaction que l'on fait suivre éventuellement d'un échange de l'anion $X^q$ de manière connue, avec les conditions que le mélange des acides de Lewis comprenne au moins 0,1 mol de l'halogénure d'aluminium et au moins 0,1 mol de l'halogénure de titane ou de ($C_5H_4R^1$)-Ti et que les proportions soient dans tous les cas rapportées à une mole du ferrocène ou de son dérivé.

2. Procédé selon la revendication 1 dans lequel R est un anion cyclopentadiényle $C_5H_4R^1$, $R^1$ étant l'hydrogène ou le groupe méthyle.

3. Procédé selon la revendication 1 dans lequel $R^1$ est l' hydrogène..

4. Procédé selon la revendication 1 dans lequel le $\pi$-arène $R^2$ est un groupe aromatique ayant de 6 à 24 atomes de carbone ou un groupe hétéroaromatique ayant de 3 à 30 atomes de carbone avec un ou deux hétéroatomes.

5. Procédé selon la revendication 1 dans lequel X est choisi parmi les anions $BF_4$-, $PF_6$-, $AsF_6$- et $SbF_6$-.

6. Procédé selon la revendication 1 dans lequel on opère avec de 1,5 à 6,0 mol de l'acide de Lewis par mole du ferrocène ou de son dérivé.

7. Procédé selon la revendication 1 dans lequel on utilisé un mélange d'halogénures d'aluminium et de titane tétravalent.

8. Procédé selon la revendication 1 dans lequel le rapport molaire de l'halogénure de titane à l'halogénure d'aluminium est compris entre 1:4 et 4:1.

9. Procédé selon la revendication 7 dans lequel on opère avec de 0,6 à 1,9 mol de l'halogénure de titane par mole du ferrocène ou de son dérivé, et le cas échéant avec un agent réducteur métallique.

10. Procédé selon la revendication 1 dans lequel on opère avec un mélange de 0,1 à 4,0 mol de l'halogénure d'aluminium et de 0,7 à 1,9 mol de l'halogénure de titane par mole du ferrocène ou de son dérivé et le cas échéant avec de l'aluminium finement divisé, les halogénures étant les bromures ou chlorures.

11. Procédé selon la revendication 1 dans lequel on opère avec un mélange de 2,0 à 3, 0 mol d'$AlCl_3$ et de 0,1 à 1,1 mol de $TiCl_4$ ainsi qu'avec de 0,3 à 0,4 mol d'aluminium finement divisé, par mole du ferrocène ou de son dérivé.

12. Procédé selon la revendication 1 pour l'obtention simultanée de composés de formule I et de formule III

$$\left[ R\ Fe\ R^2 \right]_q^{\oplus} X^{q\ominus} \qquad (I), \quad (R)_2Ti(Hal)_2\ (III),$$

Hal désignant un atome d'halogène et R, $R^2$, X et q ayant les significations données à la revendication 1, procédé caractérisé en ce que l'on utilise un mélange d'halogénures de titane tétravalent et d'aluminium comprenant de 0, 3 à 0, 7 mol de l'halogénure de titane par mole du ferrocène ou de son dérivé, éventuellement en association avec un agent réducteur métallique.

13. Procédé selon la revendication 12 dans lequel on utilise un mélange de 0,3 à 0,7 mol de l'halogénure de titane et de 0,8 à 2,0 mol de l'halogénure d'aluminium par mol du ferrocène ou de son dérivé, éventuellement avec de l'aluminium finement divisé, les halogénures étant les bromures ou chlorures.

14. Procédé selon la revendication 12 dans lequel on utilise un mélange de 0,4 à 0,6 mol de l'halogénure de titane et de 1,0 à 1,8 mol de l'halogénure d'aluminium, éventuellement avec de 0,1 à 1,0 mol d'aluminium finement divisé, par mole du ferrocène ou de son dérivé, les halogénures étant les bromures ou chlorures.

15. Procédé selon la revendication 12 dans lequel on utilise comme acide de Lewis un mélange de 0,4 à 0,6 mol de $TiCl_4$ et de 1,2 à 1,4 mol d'$AlCl_3$, éventuellement avec 0,15 à 0,2 moi d'aluminium finement divisé, par mol du ferroncène ou de son dérivé.

16. Procédé selon la revendication 1 dans lequel on utilise de 0,1 à 1,0 mol du réducteur métallique par mole de ferrocène ou de son dérivé.

17. Procédé selon la revendication 1 dans lequel le réducteur métallique est dans une proportion équivalente par rapport à l'halogénure de titane.

18. Procédé selon la revendication 12 dans lequel, une fois la réaction terminée, on désactive le mélange avec de l'eau ou un mélange d'eau et de glace acidifiés puis

a) après avoir filtré et séparé les phases, on soumet la phase aqueuse à une extraction avec un solvant organique polaire dans des conditions oxydantes ou bien

b) on soumet le mélange de réaction désactivé à une oxydation.